(19) Europäisches Patentamt
European Patent Office
Office européen des brevets

(11) **EP 4 671 185 A1**

(12) **EUROPEAN PATENT APPLICATION**

(43) Date of publication:
**31.12.2025 Bulletin 2026/01**

(51) International Patent Classification (IPC):
**B66C 13/46** (2006.01) **B66C 13/48** (2006.01)
**B66C 19/00** (2006.01)

(21) Application number: **24184529.6**

(22) Date of filing: **26.06.2024**

(52) Cooperative Patent Classification (CPC):
**B66C 13/46; B66C 13/48; B66C 19/007;
G06Q 10/063; G06Q 10/083; G06T 7/70;**
G06T 2207/20081; G06T 2207/30244

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB Schweiz AG
5400 Baden (CH)**

(72) Inventors:
• **MARANÒ, Stefano
8050 Zürich (CH)**
• **MAAS, Deran
8046 Zürich (CH)**
• **ARSENALI, Bruno
5200 Brugg (CH)**

(74) Representative: **Sykora & König Patentanwälte
PartG mbB
Maximilianstraße 2
80539 München (DE)**

(54) **METHOD, A CONTROLLER, A POSITIONING DEVICE, AND A COMPUTER PROGRAM FOR DETERMINING A POSITION OF A CONTAINER ON A CONTAINER BAY OF A CONTAINER VESSEL**

(57) A method for determining a position of a container (24) on a container bay (22) of a container vessel (20) is described. The method comprises: receiving image data from at least one camera (40, 44) mounted on a structure of a crane (30), wherein the structure of the crane (30) at least partly extends over the container bay (22) and wherein the image data are representative of a first image and at least a second image each showing at least an area of the container bay (22) in which the container (24) is arranged; and determining the position of the container (24) depending on the image data by a machine learning algorithm.

**Fig. 1**

EP 4 671 185 A1

## Description

FIELD OF THE INVENTION

The invention relates to the field of automation of ship-to-shore cranes for stevedoring a container vessel. In particular, the invention relates to a method, a controller, a positioning device, and a computer program for determining a position of a container on a container bay of a container vessel.

BACKGROUND OF THE INVENTION

Container vessels for transporting containers all around the world are regularly loaded and unloaded at container terminals of harbours. The container vessels berthing at a quay of the harbour at one of the terminals may be stevedored by cranes, in particular Ship-to-shore (STS) cranes. These cranes and their operation efficiency determine the speed of operation for the whole terminal and the efficiency of STS cranes is extremely important for the profitability of the whole terminal. Nowadays, STS cranes, in short "cranes" in the following, are already partly automated and can be remotely operated from a centralized control room of the terminal. The remote operation contributes to a very safe and healthy working environment for crane operators at a very high productivity. In particular, the cranes can be operated faster with shorter cycle times.

A manual interaction of the operators that is still needed today is over the container vessel. This is the least manually controlled environment, and the large variety of different container vessels and container types make an autonomous operation challenging. In addition, the container vessel may slowly move when berthing at the quay, which requires to update the information over time. To increasingly automate crane operations over the container vessel, detailed information about a container bay of the container vessel is needed and available cargo information is not reliable and/or sufficient for the autonomous operation of the crane.

DESCRIPTION OF THE INVENTION

It is an objective of the present invention to provide a method, a controller, a positioning device, and a computer program for determining a position of a container on a container bay of a container vessel, which contribute to a high speed and high efficiency of the crane and/or of a container terminal at which the crane is arranged, and in particular to an autonomous operation of the crane.

This objective is achieved by the subject-matter of the independent claims. Further exemplary embodiments are evident from the dependent claims and the following description.

A first aspect relates to a method for determining a position of a container on a container bay of a container vessel. The method comprises: receiving image data from at least one camera mounted on a structure of a crane, wherein the structure of the crane at least partly extends over the container bay and wherein the image data are representative of a first image and at least a second image each showing at least an area of the container bay in which the container is arranged; and determining the position of the container depending on the image data by a machine learning algorithm.

A second aspect relates to a controller for determining the position of the container on the container bay of the container vessel. The controller comprises: a memory configured for storing the image data, lidar data, and/or position data being representative of a position of the camera mounted on the structure of the crane, wherein the structure of the crane at least partly extends over the container bay; and a processor which is configured for carrying out the method as described above and in the following.

A third aspect relates to a positioning device for determining the position of the container on the container bay of the container vessel. The positioning device comprises the controller as described above and in the following and the at least one camera mounted on the structure of the crane, wherein the structure of the crane at least partly extends over the container.

A fourth aspect relates to a computer program for determining the position of the container on the container bay of the container vessel. The computer program comprises computer-readable instructions which, when being executed by the processor of the controller as described above and in the following, carry out the method as described above and in the following. The computer program may be stored on a computer-readable medium. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

It has to be understood that some features of the present invention are described with respect to one of the aspects only for conciseness reasons and to avoid unnecessary repetitions, but that these features may be easily transferred to one or more of the other aspects by the person skilled in the art.

The above aspects each enable to receive detailed information about the positions of the containers on the container bay of the container bay. This may contribute to enable the crane to operate completely automatically, in other words autonomously. This may contribute to a high speed and high efficiency of the crane and/or the whole container terminal of the corresponding harbour. In addition, the sizes and/or types of containers as well as the presence of other objects, e.g. hatch covers and walkways, can be detected automatically, e.g., by the machine learning algorithm, in order to make the position determination even more accurately or to retrieve other advantages.

The container vessel may berth at a quay of a harbour. The container vessel may be oriented to the quay such that a longitudinal extension of the container vessel is parallel to a rim of the quay at the water body on which the container vessel swims. The crane may be a ship-to-shore crane or a container crane as they are known in the art. The structure of the crane may be a support, a boom, a trolley, or a spreader of the crane. The crane, in particular the support may be movable along the quay in parallel to a longitudinal extension of the container vessel and/or in parallel to a quay wall of the quay. For example, the quay may comprise a railway structure which guides the support during its movement. The boom may be mechanically coupled to the support. The boom may extend perpendicular to the longitudinal extension of the container vessel. The boom may be fixedly coupled to the support such that the boom may be moved together with the support. The trolley may be arranged at the boom. The trolley may be moved along the boom in a direction perpendicular to the longitudinal extension of the container vessel. The spreader may be coupled to the trolley by one or more suspension elements such that the trolley holds the spreader via the suspension elements. Each suspension element may be or may comprise a rope or cable, e.g. a steel rope or steel cable. The spreader may be lifted or lowered with respect to the container vessel by moving the suspension elements accordingly. The structure of the crane to which the camera is mounted may be the boom, the trolley, or the spreader of the crane.

The machine learning algorithm may be trained to determine positions of containers from image data, for example by supervised learning. For example, image data of an amount of images showing one or more container bays and one or more containers at each of the container bays may be labelled in advance and the labelled image data may be used to train the machine learning algorithm. The machine learning algorithm may perform object detection or instance segmentation for determining the position of the container from the image data. In case of the object detection, the machine learning algorithm may be or may comprise an object detection algorithm which may determine a bounding box for each container detected in the images. The determined bounding box provides information about the position of the container and optionally of an orientation and/or a type of the container. In case of the instance segmentation, the machine learning algorithm may be or may comprise an instance segmentation algorithm which may determine sets of feature points belonging to each container instance and points belonging to other objects. Subsequent processing allows to determine, e.g., estimate, the position and optionally the other information with respect to the container. For example, when instance segmentation is used, at least one set of feature points belonging to a container results from the instance segmentation, a cuboid may be fitted to the resulting feature points, and a distance between the feature points and a surface of the corresponding cuboid may be minimized to obtain the position of the container.

Possible machine learning algorithms which may be used to detect containers from images are described in the paper "PV-RCNN: Point-voxel feature set abstraction for 3d object detection" by S. e. a. Shi, in IEEE/CVF conference on computer vision and pattern recognition, 2020; and in the paper "Learning object bounding boxes for 3D instance segmentation on point clouds" by B. e. a. Yang, advances in neural information processing systems, vol. 32, 2019.

The position of the container may be given in coordinates within a coordinate system. The coordinates may be real-world coordinates and the coordinate system may be a real-world-coordinate system. The coordinate system may be the world coordinate system, wherein the corresponding world coordinates may be given in terms of longitude and latitude. Alternatively, the coordinate system may be a local coordinate system, wherein the corresponding coordinates may be referred to as local coordinates. The local coordinate system may be a vessel coordinate system of the container vessel or a crane coordinate system of the crane.

The camera may be a mono camera having one optical channel only, or a stereo camera having two optical channels, e.g., a first channel and a second channel, as it is known in the art of stereo cameras. In case of the stereo camera, each image may comprise the information from both channels. Alternatively, in case of the stereo camera, the first image may be captured via the first channel and the second image may be captured via the second channel such that each image may contain the information of a corresponding one of the channels. The stereo camera may allow to image a 3D scene of the container bay from one single snapshot of the stereo camera.

According to an embodiment, the camera is a first camera and the image data from the first camera are received, e.g., by the controller, wherein the method comprises: determining a first position of the first camera at the time when the first image was captured; determining a second position of the first camera at the time when the second image was captured, wherein the first position is different from the second position; and determining the position of the container depending on the first and second positions.

The position of the first camera or any other camera on the structure may be known in advance and may be stored on a memory of a controller configured for carrying out the method. The position of the structure may be determined by reading out the position of the structure from a memory of a controller of the crane or by receiving the position of the structure from the controller of the crane. In the former case, the controller of the crane may be the controller carrying out the method. Then, the position(s) of the first camera or, respectively, the other camera(s) mounted on the structure of the crane may be determined depending on the position(s) of the first camera or, respectively, the other camera(s) on the structure and depending on the position of the structure.

The positions of the first camera may be determined before or after receiving the image data as long as the determined positions are that positions of the camera from which the corresponding image has been taken. That the first position is different from the second position may mean in this context that the first camera has been moved, e.g., because the structure has been moved, after capturing the first image and before capturing the second image.

According to an embodiment, the method comprises, before receiving the image data, sending a first capturing signal to the first camera, wherein the first capturing signal and the first camera are configured such that the first camera captures the first image and generates the first image data upon receiving the first capturing signal.

According to an embodiment, the method comprises, after the first camera captured the first image and before determining the second position: sending a movement signal to the crane such that the crane moves the structure at which the first camera is arranged with respect to the container vessel; and sending a second capturing signal to the first camera wherein the first camera and the second capturing signal are configured such that the first camera captures the second image upon receiving the second capturing signal while the crane is moving the structure or after the crane has moved the structure. For example, upon receiving the movement signal, the crane may be moved such that the first camera is moved from its first position to its second position, wherein the first and second positions are chosen such that the field of view of the first camera in the first position overlaps the field of view of the first camera in the second position. So, the image data may be collected while the structure, e.g., the trolley, is moving. In particular, the images may be gathered during the motion of the cameras by a Structure From Motion (SFM) approach, wherein a scale may be resolved from a state of the crane. SFM is a photogrammetric technique to estimate 3D coordinates of a 3D structure within a scene from two-dimensional images showing the scence. The SFM algorithm is able to identify common features, e.g., corners and/or edges, of the 3D structure across the two-dimensional images. Then, SFM is able to calculate the position and orientation of the camera capturing the two-dimensional images for each image. Afterwards, the 3D coordinates of the feature points can be estimated by triangulation. The camera poses and 3D feature points may be refined by using a bundle adjustment to minimize errors. This known SFM approach is described in more detail in "A Survey of Structure from Motion" by Onur Özyesil et al., arXiv:1701.08493v2 [cs.CV], 9 May 2017. The movement of the crane enables to capture images of the whole container bay one after the other until image data of the whole container bay is received. The overlapping field of views may allow a triangulation of image keypoints of or on the container bay, e.g., of the containers on the container bay, for determining the positions of the containers.

In the reality, the first camera and any further camera of the positioning device may continuously capture images, e.g., in form of a video stream, in particular while the structure(s) to which the cameras are mounted is moving. From this video stream, in particular from the image data forming the video stream, the position of the container and of any other container on the container bay may be determined by the method described herein.

That the crane moves the structure may mean that the whole crane is moving, in particular that the support is moving, or that the support stays still and the boom, the trolley, and/or the spreader are moved by the crane.

According to an embodiment, the camera is a first camera, wherein a first part of the image data representing the first image is generated by the first camera, wherein a second part of the image data representing the second image is generated by a second camera, and wherein the second camera is mounted on a structure of the crane, and the method comprises: determining the first position of the first camera at the time when the first image was captured; determining a second position of the second camera at the time when the second image was captured, wherein the first position is different from the second position; and determining the position of the container depending on the first and second positions. The first and second cameras may be mounted on the same or on different structures of the crane. For example, the first and second cameras may be arranged at the trolley. Alternatively, one of the cameras may be arranged at the support or the spreader of the crane while the other one of the cameras may be arranged at the trolley.

According to an embodiment, the method comprises, before receiving the image data, sending a first capturing signal to the first and second cameras, wherein the first capturing signal and the cameras are configured such that the cameras capture the corresponding images and generate the corresponding image data upon receiving the first capturing signal.

According to an embodiment, the method comprises, after the cameras captured the images and before determining the position of the container, sending a movement signal to the crane such that the crane moves the structure at which the first camera is arranged and the structure at which the second camera is arranged with respect to the container vessel; and sending a second capturing signal to the cameras, wherein the cameras and the second capturing signal are configured such that each of the cameras captures at least one further image upon receiving the second capturing signal while the crane is moving the corresponding structure or after the crane has moved the corresponding structure, wherein the position of the container is determined depending on the further image data.

According to an embodiment, the first and second cameras are arranged such that a first field of view of the first camera at least partly overlaps a second field of view of the second camera.

According to an embodiment, the method comprises, after receiving the image data and before determining the position of the container depending on the image data, determining a map of the container bay from the image data, wherein the map comprises a digital representation of the area of the container bay, wherein the position of the container is determined depending on the image data by determining the position of the container from the map. The more images are captured and used for determining the map the more accurate the map may be. In case of the images being part of the video stream, the map of the container bay may be determined. Then, the position of the container and of any other container on the container bay may be determined from the map.

The map may be a three-dimensional map of the container bay. The map may be obtained from the image data by photogrammetry techniques, e.g., as described in "Structure-from-Motion Revisited" by J. L. a. J.-M. F. Schonberger, in IEEE conference on computer vision and pattern recognition, 2016. This approach is based on matching features. In particular, from each captured image, feature points may be detected, the feature points may be matched across two or more of the images, an optimization problem is formulated to capture all the constraints provided by the matched feature points and, if available, from the position of the crane, in particular of the structure of the crane, e.g., of the trolley. The position of the crane, in particular the structure of the crane may provide a coarse position of the camera(s) mounted on the corresponding structure. This coarse position(s) of the camera(s) may be used as an additional input for building the map. Then, the optimization problem may provide a three-dimensional position of each feature point in a suitable coordinate system, e.g. the real-world coordinate system, e.g., the world coordinate system, the vessel coordinate system, or the crane coordinate system. This approach may be used for different amounts of cameras and/or different camera setups, as described below with respect to the figures. The resulting map may consist of a list of points with their three-dimensional position within the coordinate system. Optionally, each feature point in the map may be provided with a colour attribute. For example, at least some of the matched (3D) feature points may be provided with a characterizing colour. This colour of could be obtained from the 2D images. For example, for a given feature point an average colour of a small region around this feature point in the image may be used as the characterizing colour.

The map may be given or described by a point cloud comprising the feature points. Alternatively, one can also obtain disparities directly using machine learning. Each of these disparities corresponds to a difference in image coordinates of similar or the same features within two different images. The disparities may be obtained by using feature points and matching the feature points or by using a correspondingly trained machine learning algorithm, e.g., as described in detail in "Pyramid Stereo Matching Network" (PSMNet), by Jia-Ren Chang and Yong-Sheng Chen, Department of Computer Science, National Chiao Tung University, Taiwan, arxiv: 1803.08669v 1, [cs.CV], 23 Mar 2018. Then, when using two cameras or a stereo camera, a distance of a given feature point may be computed using the following formula:

$$\text{distance} = (\text{focal length} * \text{distance between the two cameras})/\text{disparity}$$

So, when there are two 2D images and a matched feature point on both of these images, the location of this 2D feature point may be computed in 3D and the corresponding 3D coordinates may be determined accordingly.

To obtain the position of the container from the map by the machine learning algorithm, an object detection may be used as the machine learning algorithm, e.g., by PV-RCNN, in case of the map being a 3D. Alternatively, the container may be detected directly from the 2D images represented by the image data, e.g., directly from the first and/or second image, using e.g. yolo or transformers. When the position of the container in the 2D image is known the position of the container in the map may be determined. There are several approaches to determine the position of the container in the map from the position of the container in the 2D image. Firstly, triangulation may be used. When the same container is detected within two 2D images, a centre of this container may be represented by two lines, i.e., one line from a first camera and the other line from a second camera. The intersection of these two lines may be representative of the position of the container in the 3D map. Secondly, by using the disparity map, wherein a polygon on the image representing the container may be mapped to 3D using the disparity map. Thirdly, feature points inside the detected container may be used, wherein the feature points in the 2D images correspond to 3D feature points in the map and a 3d cuboid representing the container may be fitted in these points.

According to an embodiment, the method comprises receiving lidar data from at least one lidar device mounted on a structure of the crane, wherein the lidar data are representative of an amount of lidar points within the area of the container bay; and determining the position of the container depending on the lidar data. For example, the position of the container may be determined from image data and the position of the container may be determined from the lidar data and the determined positions may be compared to each other or may be fused to determine the position of the container from the image data and the lidar data. Alternatively, the image data and the lidar data may be fused and the position of the container may be determined depending on the fused data by the machine learning algorithm. In this case, the machine learning algorithm has been trained to determine the position of the container from the fused data.

The image data may be used to determine the position of the container in a plane parallel to an image plane of the corresponding camera. So, the image data may be used to determine a two-dimensional position of the container. The lidar data may be used to determine depth information about the position of the container, wherein the depth information may provide information about the position of the container in a third dimension. So, the fused data may be used to determine the three-dimensional position of the container.

According to an embodiment, the positioning device comprises a second camera mounted on a structure of the crane.

According to an embodiment, the positioning device comprises a lidar device mounted on a structure of the crane.

These and other aspects of the invention will be apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig. 1 shows a side view of a crane and a cross-sectional view of a container vessel, according to an embodiment of the present invention;

Fig. 2 shows a side view of a crane and a cross-sectional view of a container vessel, according to an embodiment of the present invention;

Fig. 3 shows a side view of a crane and a cross-sectional view of a container vessel, according to an embodiment of the present invention;

Fig. 4 shows a flow-chart of a method for determining a position of a container on a container bay of the container vessel of figures 1, 2, or 3, according to an embodiment of the present invention.

Fig. 5 shows a flow-chart of a method for determining a position of a container on a container bay of the container vessel of figures 1, 2, or 3, according to an embodiment of the present invention.

Fig. 6 shows a flow-chart of a method for determining a position of a container on a container bay of the container vessel of figures 1, 2, or 3, according to an embodiment of the present invention.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

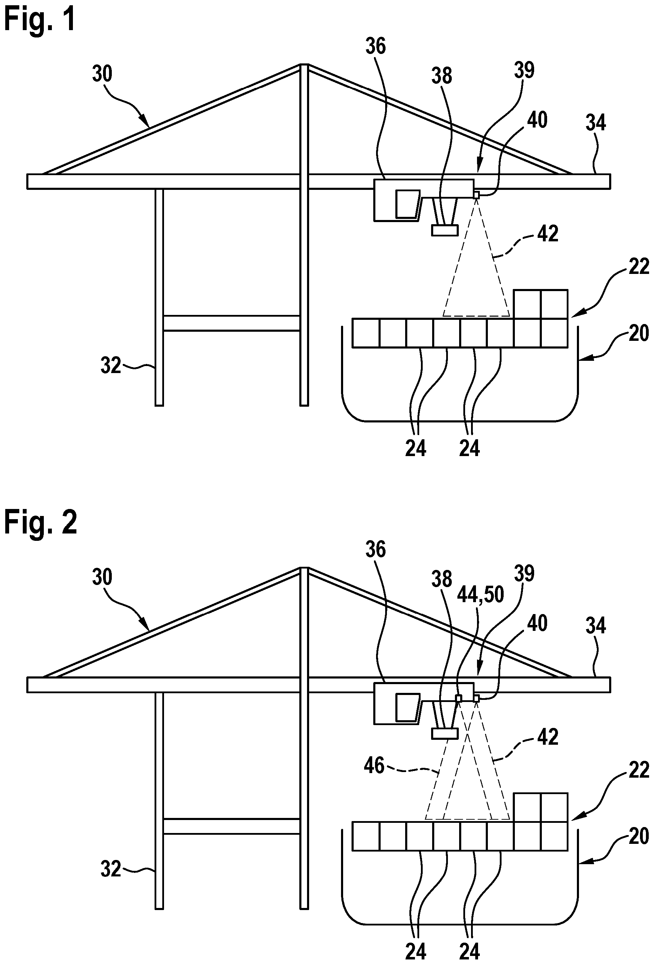

Fig. 1 shows a side view of a crane 30 and a cross-sectional view of a container vessel 20, according to an embodiment of the present invention;

The container vessel 20 may berth at a quay of a harbour. The container vessel 20 may be oriented to the quay such that a longitudinal extension, perpendicular to the cross-section shown in figure 1, of the container vessel 20 is parallel to a rim of the quay at the water body on which the container vessel 20 swims. The container vessel 20 has a container bay 22 on which several containers 24 are arranged. In other words, the containers 24 are arranged in an area of the container bay 22.

The crane 30 may be a ship-to-shore crane, in other words a container crane, as they are known in the art. A structure of the crane 30 may have a support 32, a boom 34, a trolley 36, or a spreader 38. The crane 30, in particular the support 32 may be movable along the quay in parallel to the longitudinal extension of the container vessel 20 and/or in parallel to a quay wall of the quay. For example, the quay may comprise a railway structure which guides the support 32 during its movement.

The boom 34 may be mechanically coupled to the support 32. The boom 34 may extend perpendicular to the longitudinal extension of the container vessel 20. The boom 34 may extend at least in part over the container bay 22. The boom 34 may be fixedly coupled to the support 32 such that the boom 34 may be moved together with the support 32.

The trolley 36 may be arranged at the boom 34. The trolley 36 may be moved along the boom 34 in a direction perpendicular to the longitudinal extension of the container vessel 20. The spreader 38 may be coupled to the trolley 34 by one or more suspension elements such that the trolley 34 holds the spreader 38 via the suspension elements. Each suspension element may be or may comprise a rope or cable, e.g. a steel rope or steel cable. The spreader 38 may be lifted or lowered with respect to the container vessel 20 by moving the suspension elements accordingly.

At least a part of a positioning device 39 is arranged at the crane 30. The positioning device 39 comprises at least one camera, e.g., a first camera 40. The first camera 40 is mounted to a part of the structure of the crane 30 which at least partly extends over the container bay 22, for example to the boom 34, the trolley 36, or the spreader 38. The first camera 40 has a first field of view 42. The first camera 40 is arranged such that at least some of the containers 24 are arranged within the first field of view 42.

The first camera 40 and any other camera mentioned in the following may be a mono camera or a stereo camera having two optical channels, e.g., a first channel and a second channel.

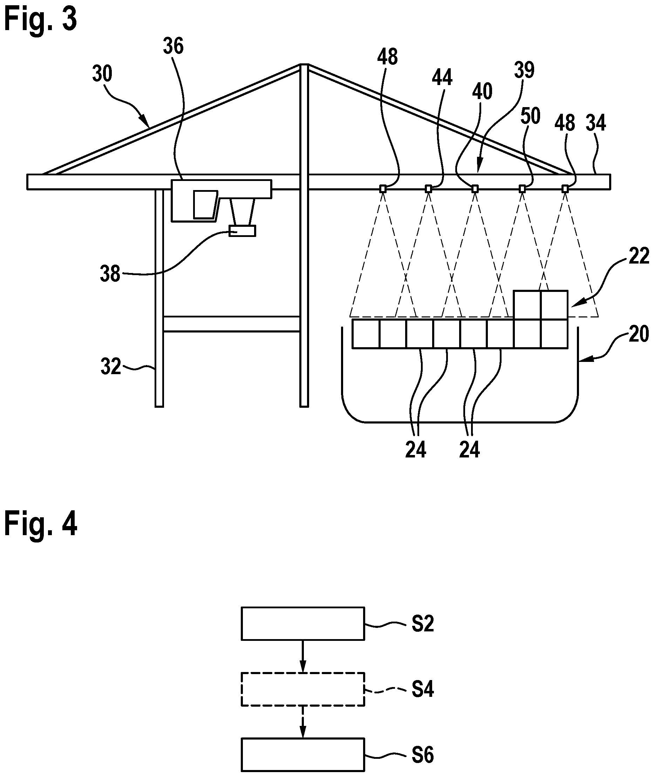

The positioning device 39 may further comprise a controller (not shown) communicatively coupled to the first camera 40. The controller may comprise a memory and a processor (not shown) coupled to the memory. The controller may be arranged at the crane 30, in a harbour building in which a control room for controlling the crane 30 is arranged, or in a remote server, for example. A function of the positioning device 39 and in particular of the controller is explained in more detail with respect to figures 4 to 6 below.

Fig. 2 shows a side view of a crane 30 and a cross-sectional view of a container vessel 20, e.g., the container vessel 20 of figure 1, according to an embodiment of the present invention. At least a part of a positioning device 39, e.g., the first camera 40, is arranged at the crane 30. The positioning device 39 and the crane 30 shown in figure 2 may widely correspond to the positioning device 39 and the crane 30, respectively, described with respect to figure 1. Therefore, in order to provide a concise description and to avoid any unnecessary repetitions, only those features of the positioning device 39 and the crane 30 of figure 2 are described in the following, in which the positioning device 39 and the crane 30 shown in figure 2 differ from the positioning device 39 and the crane 30 described with respect to figure 1.

The positioning device 39 may comprise a second camera 44 mounted on the structure of the crane 30. The second camera 44 may be arranged at the same structure of the crane 30 at which the first camera 40 is arranged. Alternatively, the second camera 44 may be arranged at another one of the structures of the crane 30. The second camera 44 has a second field of view 46. The second camera 44 is arranged such that the second field of view 46 covers at least a part of the container bay 22. The first and second cameras 40, 44 may be arranged such that the first field of view 42 of the first camera 40 at least partly overlaps the second field of view 46 of the second camera 44.

Alternatively, instead of the second camera 44, the positioning device 39 may comprise a lidar device 50 mounted on one of the structures of the crane 30. The lidar device 50 may be arranged at the same structure of the crane 30 at which the first camera 40 is arranged. Alternatively, the lidar device 50 may be arranged at another one of the structures of the crane 30. In case of the lidar device 50 being arranged, the second field of view 46 may be the field of view of the lidar device 50. In this case, the lidar device 50 may be arranged such that the second field of view 46 covers at least a part of the container bay 22. The first camera 40 and the lidar device 50 may be arranged such that the first field of view 42 of the first camera 40 at least partly overlaps the second field of view 46 of the lidar device 50.

Fig. 3 shows a side view of a crane 30 and a cross-sectional view of a container vessel, e.g., the container vessel 20 of figure 1, according to an embodiment of the present invention. At least a part of a positioning device 39, e.g., the first and the second cameras 40, 44, is arranged at the crane 30. The positioning device 39 and the crane 30 shown in figure 3 may widely correspond to the positioning device 39 and the crane 30, respectively, described with respect to figures 1 and 2. Therefore, in order to provide a concise description and to avoid unnecessary repetitions, only those features of the positioning device 39 and the crane 30 of figure 3 are described in the following, in which the positioning device 39 and the crane 30 shown in figure 3 differ from the positioning device 39 and the crane 30 described with respect to figures 1 and 2.

The positioning device 39 may comprise one, two or more further cameras 48 mounted on the structure of the crane 30. The further cameras 48 may be arranged at the same structure of the crane 30 at which the first and/or second cameras 40, 44 are arranged. Alternatively, one or more of the further cameras 48 may be arranged at another one of the structures of the crane 30. The further cameras 48 each has a further field of view (not explicitly referenced in the figures). The further cameras 48 may be arranged such that each of their field of views covers at least a part of the container bay 22. For example, the cameras 40, 44, 48 may be arranged such that their field of views 42, 46 overlap each other, e.g., such that the whole width of the container vessel 20 is continuously covered by the field of views of the cameras 40, 44, 48.

Additionally, the positioning device 39 may comprise the lidar device 50 mounted on one of the structures of the crane 30. The lidar device 50 may correspond to the lidar device 50 described with respect to figure 2.

Fig. 4 shows a flow-chart of a method for determining a position of one of the containers 24 on the container bay 22 of the container vessel 22 of figures 1, 2, or 3, according to an embodiment of the present invention.

In a step 2, image data from at least one of the cameras, e.g., of the first camera 40, are received. The image data are representative of a first image and at least a second image each showing at least an area of the container bay 22 in which the container 24 is arranged. The image data may be generated by the first camera 40 when capturing the first image. The image data may be received by the controller. In case of the first camera 40 being the stereo camera, each image may comprise the information from both channels of the first camera 40. Alternatively, in case of the stereo camera, the first image may be captured via the first channel and the second image may be captured via the second channel such that each image may contain the information of a corresponding one of the channels.

In an optional step S4, a map of the container bay 22 may be determined from the image data, e.g., by the controller. The map may comprise a digital representation of the area of the container bay 22. The map may be a three-dimensional map of the container bay 22 and of the containers 24 on the container bay 22. The map may be obtained from the image data by photogrammetry techniques, e.g., as described in "Structure-from-Motion Revisited" by J. L. a. J.-M. F. Schonberger, in IEEE conference on computer vision and pattern recognition, 2016. This approach is based on matching features. In particular, from each captured image, feature points may be detected, the feature points may be matched across two or more of the images, e.g., the first and second images, an optimization problem may be formulated to capture all the constraints provided by the matched feature points and, if available, from a position of the crane 30, in particular of the structure of the crane 30. Then, the optimization problem may provide a three-dimensional position of each feature point in a suitable coordinate system, e.g. the real-world coordinate system, e.g., the world coordinate system, a vessel coordinate system of the container vessel 20, or a crane coordinate system of the crane 30. The resulting map may consist of a list of points with their three-dimensional position within the coordinate system. Optionally, each feature point in the map may be provided with a colour attribute. The map may be given or described by a point cloud comprising the feature points. Alternatively, one can also obtain disparities directly using machine learning, as explained above.

In a step S6, the position of the container 22 may determined depending on the image data by a machine learning algorithm. For example, the container 24 may be detected directly from 2D images represented by the image data, e.g., directly from the first and/or second image, e.g., by using the known object detection algorithms "yolo" or "transformers". The machine learning algorithm may be implemented in the controller.

The machine learning algorithm may be trained to determine positions of containers 24 from image data, for example by supervised learning. For example, image data of an amount of images showing one or more container bays 22 and one or more containers 24 at each of the container bays 22 may be labelled in advance and the labelled image data may be used to train the machine learning algorithm. The machine learning algorithm may perform object detection or instance segmentation for determining the position of the container 24 from the image data.

In case of the object detection, the machine learning algorithm may be or may comprise an object detection algorithm which may determine a bounding box for each container 24 detected in the images. The determined bounding box may provide information about the position of the container 24 and optionally of an orientation and/or a type of the container 24.

In case of the instance segmentation, the machine learning algorithm may be or may comprise an instance segmentation algorithm which may determine sets of feature points belonging to each container 24 and points belonging to other objects. Subsequent processing allows to determine, e.g., estimate, the position and optionally the other information with respect to the container 24.

Possible machine learning algorithms which may be used to detect containers 24 from images are described in the paper "PV-RCNN: Point-voxel feature set abstraction for 3d object detection" by S. e. a. Shi, in IEEE/CVF conference on computer vision and pattern recognition, 2020; and in the paper "Learning object bounding boxes for 3D instance segmentation on point clouds" by B. e. a. Yang, advances in neural information processing systems, vol. 32, 2019.

When the optional step S4 has been carried out, the position of the container 24 may be determined depending on the image data by determining the position of the container 24 from the map, in particular by the machine learning algorithm. To obtain the position of the container 24 from the map by the machine learning algorithm, an object detection may be used as the machine learning algorithm, e.g., by PV-RCNN, in case of the map being a 3D. When the position of the container in the 2D image is known the position of the container in the map may be determined, as explained above.

The position of the container 24 may be given in coordinates within a coordinate system. The coordinates may be real-world coordinates and the coordinate system may be a real-world-coordinate system. The coordinate system may be the world coordinate system, wherein the corresponding world coordinates may be given in terms of longitude and latitude. Alternatively, the coordinate system may be a local coordinate system, wherein the corresponding coordinates may be referred to as local coordinates. The local coordinate system may be a terminal coordinate system of the terminal, the vessel coordinate system of the container vessel 22 or the crane coordinate system of the crane 30.

In addition, the sizes and/or types of the containers 24 as well as the presence of other objects, e.g. hatch covers and walkways, can be detected automatically, e.g., by the machine learning algorithm, when the machine learning algorithm has been trained accordingly in advance.

After determining the position of the container 24, the crane 30 may be used to transport the container 24 to another position on the container vessel 20 or outside of the container vessel 20, e.g., at the terminal. Alternatively or additionally, the position(s) of one or more further ones of the containers 24 may be determined, in case from the map.

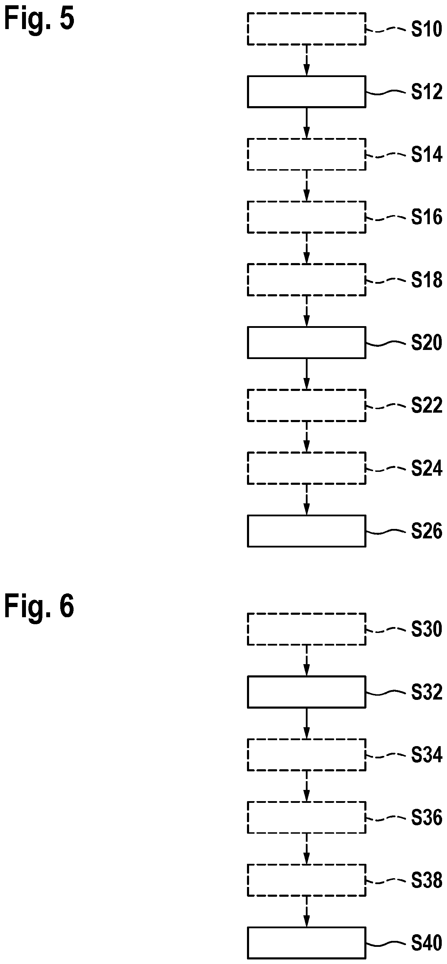

Fig. 5 shows a flow-chart of a method for determining a position of one of the containers 24 on the container bay 22 of the container vessel 20 described above, according to an embodiment of the present invention. The method described with respect to figure 5 comprises the steps of the method described with respect to figure 4. Therefore, in the following, the emphasis is put on the description of the steps in which the method described with respect to figure 5 differs from the method described with respect to figure 4 and for the rest it is referred to the description of the method of figure 4, in order to provide a concise description and in order to avoid any unnecessary repetitions.

In an optional step S10, a first capturing signal may be sent to the first camera 40. The first capturing signal and the first camera 40 may be configured such that the first camera 40 captures the first image and generates the first image data upon receiving the first capturing signal. Alternatively, instead of sending the first capturing signal, the first camera 40 may be configured for automatically capturing the first image at a certain point in time or when the crane 30 is at a predetermined position, for example.

In a step S12, the image data from at least one of the cameras, e.g., of the first camera 40, are received. The image data are representative of the first image showing at least the area of the container bay 22 in which the container 24 is arranged. Step S12 may correspond to step S2 described with respect to figure 4.

In an optional step S14, the first position of the first camera 40 at the time when the first image was captured may be determined. The position of the first camera 40 or any other camera on the structure of the crane 30 may be known in advance and may be stored on the memory of the controller configured for carrying out the method. The position of the structure may be determined by reading out the position of the structure from a memory of a controller of the crane 30 or by receiving the position of the structure from the controller of the crane 30. In the former case, the controller of the crane 30 may be the controller carrying out the method. Then, the position of the first camera 40 may be determined depending on the position of the first camera 40 on the structure and depending on the position of the structure. The positions of the first camera 40 may be determined before or after receiving the image data as long as the determined positions are that positions of the first camera 40 from which the corresponding image has been taken.

In an optional step S16, a movement signal may be sent to the crane 30 such that the crane 30 moves the structure at which the first camera 40 is arranged with respect to the container vessel 20. For example, the movement signal may be sent to the crane 30 when the crane 30 shall be moved only to determine the position of the container 24 or the map. Alternatively, instead of performing this extra step, a movement of the crane 30 for another reason may be exploited without having to send the extra movement signal.

In an optional step S18, a second capturing signal may be sent to the first camera 40. The first camera 40 and the second capturing signal may be configured such that the first camera 40 captures the second image upon receiving the second capturing signal while the crane 30 is moving the structure or after the crane 30 has moved the structure. For example, upon receiving the movement signal in step S16, the crane 30 may be moved such that the first camera 40 is moved from its first position to its second position. The first and second positions may be chosen such that the first field of view 42 of the first camera 40 in the first position overlaps the first field of view 42 of the first camera 40 in the second position. Alternatively, instead of sending the second capturing signal, the first camera 40 may capture the second image automatically after the crane 30 has moved the first camera 40 out of the first position, in particular to the second position.

In a step S20, a second position of the first camera 40 at the time when the second image was captured may be determined. The first position is different from the second position.

In an optional step S22, lidar data from the lidar device 40 may be received, e.g. by the controller. The lidar data are representative of an amount of lidar points within the area of the container bay 22. The image data may be used to determine the position of the container 24 in a plane parallel to an image plane of the corresponding camera, e.g., the first camera. So, the image data may be used to determine a two-dimensional position of the container 24. In addition, the lidar data may be used to determine depth information about the position of the container 24, wherein the depth information may provide information about the position of the container in a third dimension. So, the image data and the lidar data together may be used to determine the three-dimensional position of the container. In case of step S22 being carried out, the image data and the lidar data may be fused and may be stored as a fused data set.

In an optional step S24, the map may be determined based on the image data and, in case, on the lidar data, for example based on the fused data set. Step S24 may widely correspond to step S4 described with respect to figure 4.

In a step S26, the position of the container 24 depending on the first and second positions is determined. Step S26 may widely correspond to step S6 described with respect to figure 4. In case of step S22 having been carried out, the position of the container 24 may be determined depending on the lidar data also. For example, the position of the container 24 may be determined from the image data and the position of the container 24 may be determined from the lidar data and the determined positions may be compared to each other or may be fused to determine the position of the container 24 from the image data and the lidar data, e.g., each by a by a correspondingly trained machine learning algorithm. Alternatively, the image data and the lidar data may be fused first, and the position of the container 24 may be determined depending on the fused data by the machine learning algorithm afterwards. In this case, the machine learning algorithm has been trained to determine the position of the container 24 from the fused data.

In case of step S24 having been carried out, the position of the container 24 may be determined from the map.

Fig. 6 shows a flow-chart of a method for determining the position of the container 24 on the container bay 22 of the container vessel 20, according to an embodiment of the present invention. The method described with respect to figure 6 comprises the steps of the method described with respect to figure 4. Therefore, in the following, the emphasis is put on the description of the steps in which the method described with respect to figure 6 differs from the method described with respect to figure 4 and for the rest it is referred to the description of the method of figure 4, in order to provide a concise description and in order to avoid any unnecessary repetitions.

In an optional step S30, the first capturing signal may be sent to the first and second cameras 40, 44, wherein, in the embodiment described with respect to figure 6, the first capturing signal and the cameras 40, 44 are configured such that the cameras 40, 44 capture the first and second images and generate the corresponding image data upon receiving the first capturing signal. Basically, step S30 may be carried out corresponding to step S10 described above, with the difference that the capturing signal is dedicated to the first and second cameras 40, 44, and optionally to the further cameras 48 and/or the lidar device 50.

In a step S32, the first position of the first camera 40 at the time when the first image was captured and the second position of the second camera 44 at the time when the second image was captured are determined. The first position is different from the second position. A first part of the image data received by the controller may represent the first image and is generated by the first camera 40, whereas a second part of the image data may represent the second image and may be generated by the second camera. This principle may be easily transferred to the further cameras 48 and to the images of the container bay 22 captured by the further cameras 48, and in case to the lidar device 50.

In an optional step S34, the movement signal may be sent to the crane 30 such that the crane 30 moves the structure at which the first and second cameras 40, 44 are arranged with respect to the container vessel 20. Basically, step S34 may correspond to step S16 described above with respect to figure 5.

In an optional step S36, a second capturing signal may be sent to the cameras 40, 44. The cameras 40, 44 and the second capturing signal may be configured such that each of the cameras 40, 44 captures at least one further image upon receiving the second capturing signal while the crane 30 is moving the corresponding structure or after the crane 30 has moved the corresponding structure.

In an optional step S38, the map may be determined. The map may be determined from the first and second image data and, in case, from the further image data and the lidar data. Step S38 may widely correspond to steps S4 and S24 described above.

In a step S40, the position of the container 24 is determined depending on the image data and, in case on the lidar data and/or the first and second positions.

The controller may be configured for determining the position of the container 24 on the container bay 22 of the container vessel 20. The controller comprises the memory and the processor. The memory may be configured for storing the image data, the lidar data, and/or position data being representative of the positions of the cameras 40, 44, 48 and/or of the lidar device 50. The processor is configured for carrying out at least one of the methods as described above with respect to figures 4, 5, and 6.

A computer program for determining the position of the container 24 on the container bay 22 of the container vessel 20 may comprise computer-readable instructions which, when being executed by the processor of the controller, carry out at least one of the methods as described above.

The computer program may be stored on a computer-readable medium. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| | |
|---|---|
| Container vessel | 20 |
| Container bay | 22 |
| Container | 24 |
| Crane | 30 |
| Support | 32 |
| Boom | 34 |
| Trolley | 36 |

| Spreader | 38 |
| Positioning device | 39 |
| First camera | 40 |
| First field of view | 42 |
| Second camera | 44 |
| Second field of view | 46 |
| Further camera | 48 |
| Lidar device | 50 |

**Claims**

1. A method for determining a position of a container (24) on a container bay (22) of a container vessel (20), the method comprising:

    receiving image data from at least one camera (40, 44) mounted on a structure of a crane (30), wherein the structure of the crane (30) at least partly extends over the container bay (22) and wherein the image data are representative of a first image and at least a second image each showing at least an area of the container bay (22) in which the container (24) is arranged; and
    determining the position of the container (24) depending on the image data by a machine learning algorithm.

2. The method according to claim 1, wherein the camera is a first camera (40) and wherein the image data from the first camera (40) are received, the method comprising:

    determining a first position of the first camera (40) at the time when the first image was captured;
    determining a second position of the first camera (40) at the time when the second image was captured, wherein the first position is different from the second position; and
    determining the position of the container (24) depending on the first and second positions.

3. The method according to claim 2, before receiving the image data comprising:
   sending a first capturing signal to the first camera (40), wherein the first capturing signal and the first camera (40) are configured such that the first camera (40) captures the first image and generates the first image data upon receiving the first capturing signal.

4. The method according to claim 3, after the first camera (40) captured the first image and before determining the second position, comprising:

    sending a movement signal to the crane (30) such that the crane (30) moves the structure at which the first camera (40) is arranged with respect to the container vessel (20);
    sending a second capturing signal to the first camera (40) wherein the first camera (40) and the second capturing signal are configured such that the first camera (40) captures the second image upon receiving the second capturing signal while the crane (30) is moving the structure or after the crane (30) has moved the structure.

5. The method according to claim 1, wherein the camera is a first camera (40), wherein a first part of the image data representing the first image is generated by the first camera (40), wherein a second part of the image data representing the second image is generated by a second camera (44), and wherein the second camera (44) is mounted on a structure of the crane (30), the method comprising:

    determining a first position of the first camera (40) at the time when the first image was captured;
    determining a second position of the second camera (44) at the time when the second image was captured, wherein the first position is different from the second position; and
    determining the position of the container (24) depending on the first and second positions.

6. The method according to claim 5, before receiving the image data comprising:
   sending a first capturing signal to the first and second cameras (40, 44), wherein the first capturing signal and the cameras (40, 44) are configured such that the cameras (40, 44) capture the corresponding images and generate the corresponding image data upon receiving the first capturing signal.

7. The method according to claim 6, after the cameras (40, 44) captured the images and before determining the position of the container (24), comprising:

sending a movement signal to the crane (30) such that the crane (30) moves the structure at which the first camera (40) is arranged and the structure at which the second camera (44) is arranged with respect to the container vessel (20);

sending a second capturing signal to the cameras (40, 44), wherein the cameras (40, 44) and the second capturing signal are configured such that each of the cameras (40, 44) captures at least one further image upon receiving the second capturing signal while the crane (30) is moving the corresponding structure or after the crane (30) has moved the corresponding structure, wherein the position of the container (24) is determined depending on the further image data.

8. The method according to one of claims 5 to 7, wherein
the first and second cameras (40, 44) are arranged such that a first field of view (42) of the first camera (40) at least partly overlaps a second field of view (46) of the second camera (44).

9. The method according to one of the preceding claims, after receiving the image data and before determining the position of the container (24) depending on the image data, the method comprising:
determining a map of the container bay (22) from the image data, wherein the map comprises a digital representation of the area of the container bay (22), wherein the position of the container (24) is determined depending on the image data by determining the position of the container (24) from the map.

10. The method according to one of the preceding claims, comprising:

receiving lidar data from at least one lidar device (50) mounted on a structure of the crane (30), wherein the lidar data are representative of an amount of lidar points within the area of the container bay (22); and
determining the position of the container (24) depending on the lidar data.

11. A controller for determining a position of a container (24) on a container bay (22) of a container vessel (20), the controller comprising:

a memory configured for storing image data, lidar data, and/or position data being representative of a position of a camera (40, 44) mounted on a structure of a crane (30), wherein the structure of the crane (30) at least partly extends over the container bay (22); and
a processor which is configured for carrying out the method in accordance with one of the preceding claims.

12. A positioning device (39) for determining a position of a container (24) on a container bay (22) of a container vessel (20), the positioning device comprising:

the controller in accordance with claim 11;
at least a first camera (40) mounted on a structure of a crane (30), wherein the structure of the crane (30) at least partly extends over the container (24).

13. The positioning device (39) of claim 12, comprising:
a second camera (44) mounted on a structure of the crane (30).

14. The positioning device (39) of one of claims 12 or 13, comprising:
a lidar device (50) mounted on a structure of the crane (30).

15. A computer program for determining a position of a container (24) on a container bay (22) of a container vessel (20), the computer program comprising computer-readable instructions which, when being executed by a processor of a controller according to claim 11, carry out the method in accordance with one of claims 1 to 10.

**Fig. 1**

**Fig. 2**

# Fig. 3

# Fig. 4

**Fig. 5**

S10

S12

S14

S16

S18

S20

S22

S24

S26

**Fig. 6**

S30

S32

S34

S36

S38

S40

Europäisches Patentamt

European Patent Office

Office européen des brevets

## EUROPEAN SEARCH REPORT

**Application Number**

EP 24 18 4529

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 988 283 A (MATRIXTIME TECH SHANGHAI CO LTD) 2 September 2022 (2022-09-02)<br><br>* abstract; figures *<br>----- | 1-4, 9-12,14, 15 | INV.<br>B66C13/46<br>B66C13/48<br>B66C19/00 |
| X | CN 113 192 199 A (SHANGHAI AEROSPACE INTELLIGENT EQUIPMENT CO LTD) 30 July 2021 (2021-07-30)<br>* abstract; figures *<br>----- | 1,5-8, 11-13,15 | |
| X | WO 2019/151876 A1 (DIGITAL LOGISTICS AS [NO]) 8 August 2019 (2019-08-08)<br>* the whole document *<br>----- | 1,2, 10-15 | |
| X | CN 116 553 383 A (WUHAN GUIDE INTELLIGENT TECH CO LTD) 8 August 2023 (2023-08-08)<br>* abstract; figures *<br>----- | 1,10-15 | |

| | TECHNICAL FIELDS SEARCHED (IPC) |
|---|---|
| | B66C<br>G06T<br>G06V<br>G06N<br>B65G<br>G06Q |

The present search report has been drawn up for all claims

| Place of search | Date of completion of the search | Examiner |
|---|---|---|
| The Hague | 29 November 2024 | Özsoy, Sevda |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 4529

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2024

| Patent document cited in search report | | Publication date | Patent family member(s) | | Publication date |
|---|---|---|---|---|---|
| CN 114988283 | A | 02-09-2022 | NONE | | |
| CN 113192199 | A | 30-07-2021 | NONE | | |
| WO 2019151876 | A1 | 08-08-2019 | EP | 3746963 A1 | 09-12-2020 |
| | | | US | 2021056497 A1 | 25-02-2021 |
| | | | WO | 2019151876 A1 | 08-08-2019 |
| CN 116553383 | A | 08-08-2023 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. E. A. SHI**. PV-RCNN: Point-voxel feature set abstraction for 3d object detection. *IEEE/CVF conference on computer vision and pattern recognition*, 2020
- **B. E. A. YANG**. Learning object bounding boxes for 3D instance segmentation on point clouds. *advances in neural information processing systems*, 2019, vol. 32
- **ONUR ÖZYESIL et al.** A Survey of Structure from Motion. *arXiv:1701.08493v2 [cs.CV*, 09 May 2017
- **J. L. A. J.-M. F. SCHONBERGER**. Structure-from-Motion Revisited. *IEEE conference on computer vision and pattern recognition*, 2016
- Pyramid Stereo Matching Network. **JIA-REN CHANG** ; **YONG-SHENG CHEN**. arxiv: 1803.08669v 1, [cs.CV. Department of Computer Science, National Chiao Tung University, 23 March 2018